(19) Europäisches Patentamt
European Patent Office
Office européen des brevets

(11) EP 3 978 460 B1

(12) EUROPEAN PATENT SPECIFICATION

(45) Date of publication and mention of the grant of the patent:
**10.05.2023 Bulletin 2023/19**

(21) Application number: **20813510.3**

(22) Date of filing: **27.05.2020**

(51) International Patent Classification (IPC):
***C07B 57/00*** (2006.01) ***C08B 37/08*** (2006.01)
***B01J 20/24*** (2006.01) ***B01J 20/29*** (2006.01)
***B01J 20/286*** (2006.01) ***B01J 20/32*** (2006.01)

(52) Cooperative Patent Classification (CPC):
**C07B 57/00; B01J 20/24; B01J 20/286; B01J 20/29; B01J 20/3204; B01J 20/3255; C08B 37/003;** Y02P 20/54

(86) International application number:
**PCT/JP2020/020894**

(87) International publication number:
**WO 2020/241678 (03.12.2020 Gazette 2020/49)**

(54) **CHITOSAN COMPOUNDS AND OPTICAL ISOMER SEPARATING AGENT**
CHITOSANVERBINDUNGEN UND TRENNMITTEL FÜR OPTISCHE ISOMERE
COMPOSÉS DE CHITOSANE ET AGENT DE SÉPARATION D'ISOMÈRES OPTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2019 CN 201910462730**

(43) Date of publication of application:
**06.04.2022 Bulletin 2022/14**

(73) Proprietor: **Daicel Corporation**
**Osaka 530-0011 (JP)**

(72) Inventors:
- **ZHANG, Lili**
  **Harbin, Heilongjiang, 150001 (CN)**
- **DENG, Hongzhong**
  **Harbin, Heilongjiang, 150001 (CN)**
- **WU, Xuepeng**
  **Harbin, Heilongjiang, 150001 (CN)**
- **SHEN, Jun**
  **Harbin, Heilongjiang, 150001 (CN)**
- **OKAMOTO, Yoshio**
  **Harbin, Heilongjiang, 150001 (CN)**

(74) Representative: **Grünecker Patent- und Rechtsanwälte**
**PartG mbB**
**Leopoldstraße 4**
**80802 München (DE)**

(56) References cited:
**WO-A1-95/18833** **JP-A- H07 330 809**
**JP-A- 2000 264 902** **JP-A- 2007 327 041**

- **Okamoto, Y. Noguchi, J. Yashima, E.: "Enantioseparation on 3,5-dichloro- and 3,5-dimethylphenylcarbamates of polysaccharides as chiral stationary phases for high-performance liquid chromatography", Reactive and Functional Polymers, vol. 37, no. 1-3, 1 June 1998 (1998-06-01) , pages 183-188, XP004127881, AMSTERDAM, NL ISSN: 1381-5148, DOI: 10.1016/S1381-5148(97)00135-1**
- **"USEFUL CHIRAL PACKING MATERIALS FOR HIGH-PERFORMANCE LIQUID CHROMATOGRAPHIC RESOLUTION OF ENANTIOMERS PHENYLCARBAMATES OF POLYSACCHARIDES COATED ON SILICA GEL", J. Am. Chem. Soc., vol. 106, no. 18, 1984, pages 5357-5359, XP002500441, DOI: 10.1021/ja00330a057**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 978 460 B1

- Shibano Masaya, Karakawa Makoto, Kamitakahara Hiroshi, Takano Toshiyuki: "Preparation and electro-optical properties of triphenylamine-bound chitosan derivative", International Journal of Biological Macromolecules, vol. 126 , pages 1112-1115, XP009532322, NL ISSN: 0141-8130, DOI: 10.1016/j.ijbiomac.2018.12.194
- "Enantioseparation using chitosan 2-isopropylthiourea-3,6-dicarbamate derivatives as chiral stationary phases for high-performance liquid chromatography", Journal of Chromatography A, vol. 1623, no. 461174 19 July 2020 (2020-07-19), pages 1-9, XP086155749, DOI: 10.1016/j.chroma.2020.461174 [retrieved on 2020-05-15]

## Description

### Technical Field

The present disclosure relates to a chitosan compound having a structure in which an amino group at a 2-position of chitosan is substituted with a thiourea group, and a separating agent for an optical isomer, the separating agent having the chitosan compound and a carrier.

### Background Art

Optical isomers are used as medicines and raw materials for medicines. In such applications in which the optical isomers are used to act on living bodies, typically only one of the optical isomers is used, and extremely high optical purity is required. Methods of manufacturing an optical isomer requiring such high optical purity known in the art include a method involving separating one of the optical isomers from a mixture of optical isomers, such as a racemate, by using a column packed with a separating agent for optical isomers, the separating agent having optical resolution ability, in chromatography, such as liquid chromatography, simulated moving bed chromatography, or supercritical fluid chromatography.

For separating agents for optical isomers, macromolecules having an optically active site can be used. Such a separating agent for optical isomers is typically constituted of a carrier such as a silica gel, and the macromolecule described above supported on the surface of the carrier. The separating agent is packed in a column and used for optical resolution.

The macromolecule having an optically active site known in the art include polysaccharides and polysaccharide derivatives in which hydroxyl groups in the polysaccharide are substituted with alkyl-substituted phenyl carbamates. For such a polysaccharide, in addition to cellulose or amylose, chitosan is also known

(Patent Document 1 and Non-Patent Literature 1).

### Citation List

#### Patent Document

Patent Document 1: JP 63-178101 A

#### Non-Patent Literature

Non-Patent Literature 1: J. Chromatogr. A 1365 (2014) 86-93

### Summary of Invention

#### Technical Problem

In the separating agent for optical isomers disclosed in Patent Document 1 and Non-Patent Literature 1, a chitosan compound in which hydroxyl groups at 3,6-positions of chitosan are substituted with carbamate groups and an amino group at 2-position is substituted with an urea group is used, but substituents other than a carbamate group and a urea group have not been investigated.

In the present disclosure, an object is to provide a separating agent for optical isomers, the separating agent having a novel chitosan compound in which an amino group at 2-position of chitosan is substituted with a thiourea group.

#### Solution to Problem

As a result of diligent research to solve the above problem, the present inventors have found that a separating agent for optical isomers, the separating agent having a chitosan compound having been unknown to date in which an amino group at a 2-position of chitosan is substituted with a thiourea group, has excellent optical resolution ability for specific racemates and completed the present invention.

The present disclosure relates to the following.

(1) A chitosan compound represented by Formula (I):

[Chem. 1]

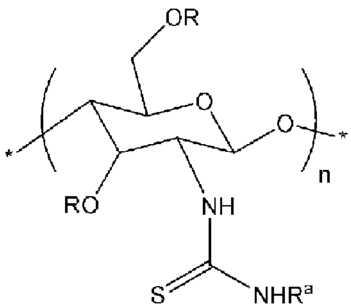

(1)

where each R is independently a group represented by Formula (II) or a group represented by Formula (III); $R^a$ is a linear alkyl group having from 1 to 5 carbons or an alkyl group having from 3 to 5 carbons and having a branched chain; and n is an integer of 5 or greater; and

[Chem. 2]

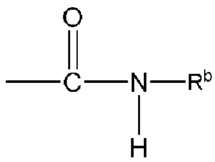

(II)

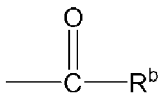

(III)

where each $R^b$ is independently an unsubstituted phenyl group, a phenyl group having a substituent, an unsubstituted cyclohexyl group, or a cyclohexyl group having a substituent, and each of the substituent is independently an alkyl group having from 1 to 5 carbons, or a halogen.

(2) The chitosan compound according to (1), wherein the R is a group represented by Formula (II), wherein $R^b$ is an unsubstituted phenyl group or a phenyl group having a substituent, and the substituent is an alkyl group having from 1 to 5 carbons, or a halogen.
(3) The chitosan compound according to (2), wherein each of the $R^b$ is independently a 2-substituted phenyl group, a 3-substituted phenyl group, a 4-substituted phenyl group, or a 3,5-substituted phenyl group.
(4) The chitosan compound according to (2), wherein the $R^b$ is any of groups represented by Formulas (a) to (e):

[Chem. 3]

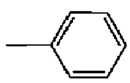 (a) 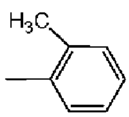 (b) 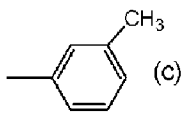 (c)

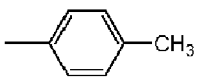 (d) 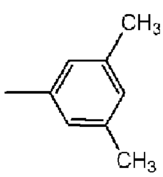 (e)

(5) The chitosan compound according to (2), wherein the $R^b$ is any of groups represented by Formulas (a), (c), (d), and (e):

[Chem. 4]

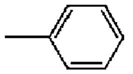 (a) 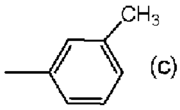 (c)

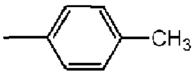 (d) 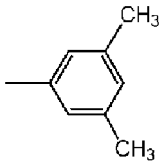 (e)

(6) The chitosan compound according to any one of (1) to (5), wherein the $R^a$ is an alkyl group having from 3 to 5 carbons and having a branched chain.

(7) A separating agent for optical isomers, the separating agent having the chitosan compound described in any of (1) to (6) and a carrier.

(8) The separating agent for optical isomers according to (7), wherein the carrier is a silica gel.

(9) A method of manufacturing a chitosan compound, the method including:

reacting a deacetylated chitosan with a compound represented by Formula (IV) to introduce a thiourea group at a 2-position of the chitosan; and

reacting the chitosan into which the thiourea group is introduced with an isocyanate, a carboxylic acid, an ester, an acid halide, an acid amide compound, or an aldehyde containing $R^b$ to introduce groups represented by Formula (II) or groups represented by Formula (III) at a 3-position and a 6-position of the chitosan:

[Chem. 5]

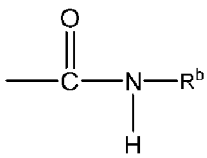 (II)

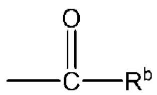 (III)

$S=C=N-R^a$ (IV)

wherein, in Formulas (II) and (III), each $R^b$ is independently an unsubstituted phenyl group, a phenyl group having a substituent, an unsubstituted cyclohexyl group, or a cyclohexyl group having a substituent, and each of the substituent is independently an alkyl group having from 1 to 5 carbons, or a halogen; and

in Formula (IV), $R^a$ is a linear alkyl group having from 1 to 5 carbons or an alkyl group having from 3 to 5 carbons and having a branched chain.

(10) The method of manufacturing a chitosan compound according to (9), wherein the group introduced at the 3-position and 6-position of the chitosan is a group represented by Formula (II), wherein $R^b$ is an unsubstituted phenyl group or a phenyl group having a substituent, and the substituent is an alkyl group having from 1 to 5 carbons, or a halogen.

(11) The method of manufacturing a chitosan compound according to (10), wherein the $R^b$ is a 2-substituted phenyl group, a 3-substituted phenyl group, a 4-substituted phenyl group, or a 3,5-substituted phenyl group.

(12) The method of manufacturing a chitosan compound according to (10), wherein the $R^b$ is any of groups represented by Formulas (a) to (e):

[Chem. 6]

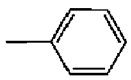 (a) 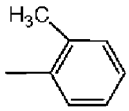 (b) 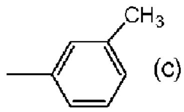 (c)

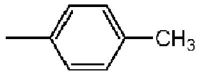 (d) 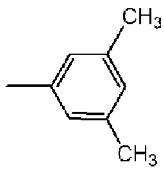 (e)

(13) The method of manufacturing a chitosan compound according to (10), wherein the $R^b$ is any of groups represented by Formulas (a), (c), (d), and (e):

[Chem. 7]

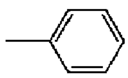 (a) 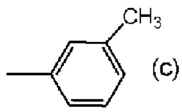 (c)

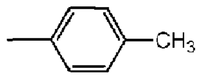 (d) 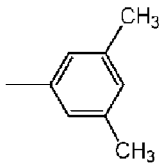 (e)

(14) The method of manufacturing a chitosan compound according to any of (9) to (13), wherein the $R^a$ is an alkyl group having from 3 to 5 carbons and having a branched chain.

Advantageous Effects of Invention

The present disclosure can provide the novel chitosan compound and the separating agent for optical isomers, the separating agent having good separation ability for specific racemates.

Brief Description of Drawings

FIG. 1 is a diagram showing a $^1$H-NMR spectrum of chitosan-2-isopropylthiourea derivative 1 at 80°C in DMSO-$d_6$.
FIG. 2 is a diagram showing a $^1$H-NMR spectrum of chitosan-2-isopropylthiourea-3,6-diphenylcarbamate derivative 2a at 80°C in DMSO-$d_6$.
FIG. 3 is a diagram showing a $^1$H-NMR spectrum of chitosan-2-isopropylthiourea-3,6-di(2-methylphenylcarbamate) derivative 2b at 80°C in DMSO-$d_6$.
FIG. 4 is a diagram showing a $^1$H-NMR spectrum of chitosan-2-isopropylthiourea-3,6-di(3-methylphenylcarbamate) derivative 2c at 80°C in DMSO-$d_6$.
FIG. 5 is a diagram showing a $^1$H-NMR spectrum of chitosan-2-isopropylthiourea-3,6-di(4-methylphenylcarbamate) derivative 2d at 80°C in DMSO-$d_6$.
FIG. 6 is a diagram showing a $^1$H-NMR spectrum of chitosan-2-isopropylthiourea-3,6-di(3,5-dimethylphenylcarbamate) derivative 2e at 80°C in DMSO-$d_6$.
FIG. 7 is a diagram showing a $^1$H-NMR spectrum of chitosan-2-isopropylthiourea-3,6-di(cyclohexylcarbamate) derivative 2f at 80°C in DMSO-$d_6$.
FIG. 8 is a chromatogram obtained during separation of a specific racemate (Rac-2) using a separating agent for optical isomers, the separating agent having been produced using chitosan-2-isopropylthiourea-3,6-di(3,5-dimethylphenylcarbamate) derivative 2e.

Description of Embodiments

Each of the configurations, their combinations, and the like in each embodiment below is an example, and an addition, omission, substitution, and other changes can be made as appropriate without departing from the spirit of the present invention. The present disclosure is not limited by the embodiments and is limited only by the claims.

Chitosan compound

A chitosan compound of the present disclosure has a structure represented by Formula (I) below, into which a thiourea group is introduced at a 2-position of chitosan:

[Chem. 8]

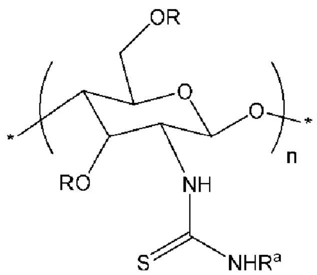

(I)

where each R is independently a group represented by Formula (II) or a group represented by Formula (III); $R^a$ is a linear alkyl group having from 1 to 5 carbons or an alkyl group having from 3 to 5 carbons and having a branched chain; and n is an integer of 5 or more; and

[Chem. 9]

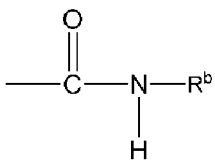

(II)

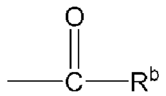

(III)

where each $R^b$ is independently an unsubstituted phenyl group, a phenyl group having a substituent, an unsubstituted cyclohexyl group, or a cyclohexyl group having a substituent, and each of the substituent is independently an alkyl group having from 1 to 5 carbons, or a halogen.

In Formula (I), R is preferably a group represented by Formula (II), and in Formula (II), each $R^b$ is preferably independently an unsubstituted phenyl group or a phenyl group having a substituent, and the substituent is preferably an alkyl group having from 1 to 5 carbons. In Formulas (II) and (III), examples of the halogen include chlorine, fluorine, or bromine.

Of the group represented by Formula (II) and the group represented by Formula (III), the group represented by Formula (II) is preferred.

Furthermore, in Formula (II), $R^b$ is preferably a phenyl group having a substituent, and the substitution position of the substituent is preferably any of 2-position, 3-position, 4-position, or both 3- and 5-positions. Specifically, in Formula (II), $R^b$ is preferably a 2-substituted phenyl group, a 3-substituted phenyl group, a 4-substituted phenyl group, or a 3,5-substituted phenyl group. The substituent in this case is an alkyl group having from 1 to 5 carbons, or a halogen, preferably a methyl group or an ethyl group, and particularly preferably a methyl group.

In Formula (II), $R^b$ is preferably any of groups represented by Formulas (a) to (e) below and more preferably any of groups represented by Formulas (a), (c), (d), and (e).

In Formula (I), $R^a$ is preferably a methyl group, an ethyl group, an n-propyl group, or an isopropyl group, and

more preferably an isopropyl group. In Formula (I), n is preferably 10 or more, and on the other hand, preferably 1000 or less, and more preferably 500 or less.

[Chem. 10]

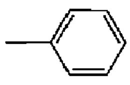 (a) 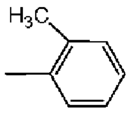 (b) 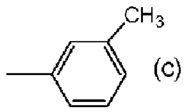 (c)

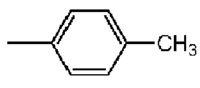 (d) 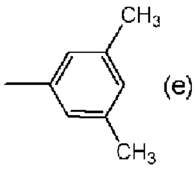 (e)

Method of manufacturing chitosan compound

Chitosan used in the present disclosure can be typically prepared by deacetylation of chitin (poly-β1,4-N-acetylglucosamine) derived from a carapace of a crustacean, such as a crab, shrimp, prawn, and lobster, by treatment, such as alkali treatment or enzymatic treatment. The chitosan according to the present disclosure is not limited to a naturally derived chitosan and may be a chemically synthesized chitosan. The chitosan used as a raw material for the chitosan compound according to the present disclosure has a proportion of deacetylated molecules in the glucosamine units constituting the chitin molecule, that is, a degree of deacetylation, in a range preferably from 80 to 100%, more preferably from 90 to 100%, and most preferably a degree of deacetylation of about 100%. The degree of deacetylation may be quantified based on a known technique (e.g., colloidal titration method). An example of the known technique includes NMR.

In addition, a naturally derived chitosan molecule with a large molecular weight composed of many sugar residues may be processed into a chitosan molecule with any molecular weight by hydrolyzation.

The number average degree of polymerization of the chitosan used in the present disclosure is preferably 5 or higher, more preferably 10 or higher, and although the upper limit is not particularly specified, the number average degree of polymerization is preferably 1000 or lower in terms of ease of handling, more preferably from 5 to 1000, even more preferably from 10 to 1000, and particularly preferably from 10 to 500.

In the above chitosan compound, some of the hydroxyl groups or amino groups of chitosan may remain unreacted or may be substituted with another substituent as long as the effects of the present invention are not impaired. Examples of the proportion include an embodiment where about 20% or less of all the hydroxyl groups or amino groups remain unreacted or are substituted with another substituent.

In the method of introducing a thiourea group at a 2-position of chitosan, preferably the deacetylated chitosan is first swelled in a solvent, such as dimethyl sulfoxide (DMSO). Examples of the temperature of the mixture during swelling include typically from 70 to 85°C and preferably from 75 to 83°C.

Next, the temperature of the mixture is lowered (typically to 25°C), then lithium chloride is added, and the mixture is stirred. The stirring time is typically approximately from 3 to 5 hours and preferably approximately 4 hours.

Isothiocyanate represented by Formula (IV) is then added to the mixture. Examples of the amount of isothiocyanate added at this time include an amount corresponding to from 2 to 2.5 equivalents and preferably from 2.1 to 2.4 equivalents of amino groups of chitosan.

[Chem. 11]

$$S{=}C{=}N\text{-}R^a \qquad \text{(IV)}$$

In Formula (IV), $R^a$ is an alkyl group having from 1 to 5 carbons or an alkyl group having from 3 to 5 carbons and having a branched chain. $R^a$ is preferably an alkyl group having from 3 to 5 carbons and having a branched chain. $R^a$ is preferably a methyl group, an ethyl group, an n-propyl group, or an isopropyl group, and more preferably an isopropyl group.

After the addition of isothiocyanate, the mixture is continued to be stirred typically at 95 to 105°C and preferably at 100°C for 24 to 36 hours. This produces a chitosan compound into which thiourea groups having $R^a$ are introduced at 2-positions of chitosan.

Next, a group represented by Formula (II) or a group represented by Formula (III) is introduced at a 3-position

and a 6-position of the chitosan compound into which the thiourea group is introduced. To introduce the group represented by Formula (II), examples include reacting the isocyanate containing $R^b$ with the chitosan compound into which the thiourea group is introduced.

To introduce the group represented by Formula (III), examples include reacting a carboxylic acid, an ester, an acid halide, an acid amide compound, or an aldehyde containing $R^b$ with the chitosan compound into which the thiourea group is introduced.

Examples of the reaction conditions for introducing the group represented by Formula (II) below at a 3-position and a 6-position of the chitosan compound into which the thiourea group is introduced include conditions in which the chitosan compound into which the thiourea group is introduced and DMSO in which lithium chloride is dissolved are heated to typically approximately from 75 to 85°C and preferably from 78 to 83°C, the isocyanate containing $R^b$ described above is added to this, and the mixture is continuously stirred for 12 to 24 hours.

In introducing the group represented by Formula (III) below at a 3-position and a 6-position of the chitosan compound into which the thiourea group is introduced, the reaction conditions equivalent to those for introducing the groups represented by Formula (II) can be used.

Through the reactions described above, thiourea groups are introduced at 2-positions of the chitosan, and a chitosan compound in which the group represented by Formula (II) or the group represented by Formula (III) are introduced at 3-positions and 6-positions is obtained. Washing or purification of the resulting product may be performed as appropriate.

[Chem. 12]

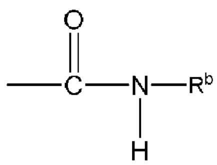
(II)

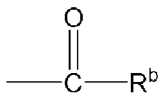
(III)

In Formulas (II) and (III), each $R^b$ is independently an unsubstituted phenyl group, a phenyl group having a substituent, an unsubstituted cyclohexyl group, or a cyclohexyl group having a substituent, and each of the substituent is independently an alkyl group having from 1 to 5 carbons, or a halogen.

In Formulas (II) and (III), each $R^b$ is preferably independently an unsubstituted phenyl group or a phenyl group having a substituent, and the substituent is preferably an alkyl group having from 1 to 5 carbons. In Formulas (II) and (III), examples of the halogen include chlorine, fluorine, or bromine.

The group represented by Formula (II) is preferably introduced into the chitosan compound into which the thiourea group is introduced.

Furthermore, in Formula (II), $R^b$ is preferably a phenyl group having a substituent, and the substitution position of the substituent is preferably any of 2-position, 3-position, 4-position, or both 3- and 5-positions. Specifically, in Formula (II), $R^b$ is preferably a 2-substituted phenyl group, a 3-substituted phenyl group, a 4-substituted phenyl group, or a 3,5-substituted phenyl group.

The substituent in this case is an alkyl having from 1 to 5 carbons, or a halogen, preferably a methyl group or an ethyl group, and particularly preferably a methyl group.

In Formula (II), preferred specific examples of $R^b$ include Formulas (a) to (e) described above in the explanation about the chitosan compound, and more preferred example is a group represented by Formula (a), (c), (d), or (e) above.

Separating agent for optical isomers

The separating agent for optical isomers of the present disclosure have the chitosan compound described above and a carrier. Examples of the carrier used to support the chitosan compound include a porous organic carrier or a porous inorganic carrier, and preferably include a porous inorganic carrier. Examples suitable for a porous organic carrier include macromolecular substances selected from polystyrenes, poly(meth)acrylamides, poly(meth)acrylates, and the like, and examples suitable for a porous inorganic carrier include silica gels, alumina, zirconia, titania, magnesia, glass, kaolin, titanium oxide, silicates, and hydroxyapatite. A preferred carrier is a silica gel, alumina, or glass.

In addition, a silica gel having a core-shell structure can also be used as the silica gel.

The carrier described above is surface-treated, and this can prevent excessive adsorption of a substance to be separated to the carrier itself. Examples of a surface treatment agent include silane coupling agents, such as aminopropylsilane, and titanate-based or aluminate-based coupling agents.

The average particle diameter of the carrier that can be used in the present disclosure is typically from 0.1 μm to 1000 μm and preferably from 1 μm to 50 μm. The average pore diameter of the carrier is typically from 10 Å to 10000 Å and preferably from 50 Å to 1000 Å.

In addition, the specific surface area of the carrier is typically from 5 to 1000 $m^2/g$ and preferably from 10 to 500 $m^2/g$.

The average particle diameter of the separating agent for optical isomers of the present disclosure can be measured with an apparatus for measurement using a microscopic image, for example, a Mastersizer 2000E available from Malvern Instruments Ltd.

For the method of allowing the carrier to support the chitosan compound, the applicable method includes physical adsorption between the chitosan compound and the carrier, chemical bonding with the carrier, chemical bonding between the chitosan compounds, chemical bonding of a third component, light irradiation of the chitosan compound, and radical reactions (see, e.g., JP 06-093002 A). The method of allowing physical adsorption includes a method of dissolving the chitosan compound in a soluble solvent, mixing well with a carrier, distilling away the solvent with an air stream under reduced pressure or warming; and also, a method of dissolving the chitosan compound in a soluble solvent, mixing well with a carrier, and then dispersing the mixture in a solvent in which chitosan is insoluble to diffuse the soluble solvent. The separating agent thus obtained is subjected to appropriate treatment, such as heating, solvent addition, or washing, and thus the separation ability can also be improved.

Examples of the amount of the chitosan compound supported on the carrier in the separating agent for optical isomers of the present disclosure include an embodiment where the amount is from 1 to 100 weight% relative to the carrier, and the amount is preferably from 5 to 50 weight%.

This supported amount can be determined by thermogravimetric analysis.

The separating agent for optical isomers of the present disclosure can be packed in a column of a known size by a known method and used as a column for HPLC.

The flow rate of the HPLC when separating optical isomers by HPLC using a column packed with the separating agent for optical isomers of the present disclosure can be appropriately adjusted and used. Examples of the flow rate include an embodiment where the linear flow rate is approximately from 0.1 mm/sec to 50 mm/sec, and the linear flow rate is preferably from 0.25 mm/sec to 2 mm/sec. This preferred linear flow rate corresponds to a flow rate of 0.25 mL/min to 2 mL/min for a column with an inner diameter of 0.46 cm.

The separating agent for optical isomers of the present disclosure can be used as a separating agent for a column not only for HPLC but also for gas chromatography; supercritical fluid chromatography; electrophoresis, particularly for a capillary column for capillary electrochromatography (for CEC), a capillary zone electrophoresis (CZE) method, and a micellar electrokinetic chromatograph (MEKC) method; and for thin layer chromatography.

Examples

Hereinafter, the present disclosure will be specifically described with reference to examples. However, the present disclosure is not limited to the embodiments in the following examples.

Examples

1.0 g (6.2 mmol) of deacetylated chitosan (Energy-Chemical (Shanghai), degree of polymerization of about 50) was dried under vacuum for 4 hours and allowed to swell in dimethyl sulfoxide (DMSO) at 80°C for 24 hours.

After the temperature was reduced to 25°C, 2.0 g of lithium chloride (LiCl) was added to the above mixture, and the mixture was stirred for 4 hours.

Isopropyl thioisocyanate (from 2 to 2.5 equivalents of amino groups of chitosan) was then added to the above mixture, and the mixture was continuously stirred at 100°C for 24 to 36 hours. The reaction mixture was filtered and washed using methanol. After drying, chitosan-2-isopropylthiourea derivative 1 was obtained (80% yield).

The resulting chitosan-2-isopropylthiourea derivative 1 (0.4 g) and LiCl (1.6 g) were dissolved in DMSO (16 mL) at 80°C. Then, phenyl isocyanate (from 2 to 2.5 equivalents of two hydroxyl groups of the chitosan compound) was added to the above solution (80°C), and the mixture was continuously stirred for 12 to 24 hours.

Outline of the above procedure is as follows. $R^a$ and $R^b$ in the formula are as described above.

[Chem. 13]

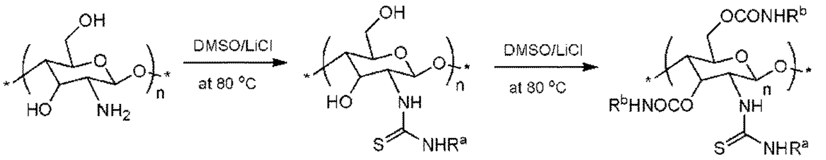


The product was separated into a methanol insoluble fraction or an ethyl acetate soluble fraction and washed with ethanol. After drying, chitosan-2-isopropylthiourea-3,6-diphenylcarbamate (chitosan compound 2a) was obtained.

The chitosan compounds 2b to 2f were obtained by the same procedure as above using each isocyanate with $R^b$ of the above formula changed as shown in Table 1. The yields of chitosan compounds 2a to 2f were from 70 to 80%.

$^1$H-NMR spectra of chitosan compound 1 and chitosan compounds 2a to 2f are shown in FIGS. 1 to 7, respectively.

The $^1$H-NMR spectra (500 MHz) were measured using a Brucker-500 Spectrometer (Brucker, USA). The sample (20 mg) was dissolved in DMSO-$d_6$ (0.5 mL). IR analyses of the chitosan compounds were carried out using a PE FT-IR spectrometer (Spectrum 100) by the potassium bromide tablet method.

Preparation of separating agent for optical isomers and production of analytical column

The chitosan compound 2a produced (0.2 g) was completely dissolved in tetrahydrofuran (5 mL), then the solution was applied to a surface of a silica gel (average particle diameter of 7 μm, average pore diameter of 100 nm) (0.8 g) surface-treated in advance with a silane coupling agent having an aminopropyl group to coat the silica gel with the solution, and separating agent 1 for optical isomerism was obtained. The weight ratio of the chitosan compound to the silica gel was 4 of the chitosan compound to 1 of the silica gel.

Separating agent 1 for optical isomers was packed in a stainless steel column (25 cm x 0.20 cm i.d.) by a slurry method, and column 1 was obtained.

The number of theoretical plates of column 1 was from 1700 to 2300 when benzene was measured as a target at 25°C by using a hexane/2-propanol (90/10, v/v) mixture as an eluent and setting a flow rate to 0.1 mL/min.

The elution time of 1,3,5-tri-tert-butylbenzene as a non-retained material was used as the dead time ($t_0$).

For the HPLC apparatus, a JASCO PU-2089 chromatograph with UV/Vis (Jasco UV-2070) and circular dichroism detector (JASCO CD-2095) was used (ordinary temperature).

A sample (a solution of a racemate (2 mg/mL (mobile phase)) was injected into the chromatography system using an Intelligent sampler (JASCO AS-2055).

The chitosan compounds 2b to 2f were also each applied to a surface of a silica gel to coat the surface of the silica gel with each chitosan compound by the same procedure as described above, and separating agents 2 to 6 for optical isomers were obtained. Separating agents 2 to 6 for optical isomers were each packed in a stainless steel column (25 cm x 0.20 cm i.d.) by a slurry method by the same procedure as described above, and columns 2 to 6 were obtained.

The results obtained by separating racemates 1 to 12 each having the following structure using columns 1 to 6 each under the HPLC conditions shown above are shown in Table 1. In the analysis using each column, eluent (A) of hexane/2-propanol (90/10, v/v) or eluent (B) of hexane/ethanol (90/10, v/v) was used at a flow rate of 0.1 mL/min and a detection wavelength of 254 nm.

In addition, a chromatogram obtained by separating racemate 2 using column 5 is shown in FIG. 8.

[Chem. 14]

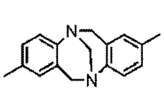
1
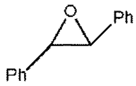
2
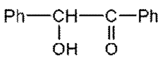
3
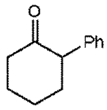
4

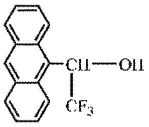
5

$Co(acac)_3$
6
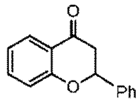
7
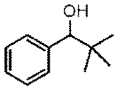
8

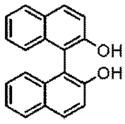
9
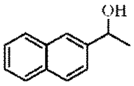
10
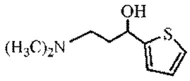
11
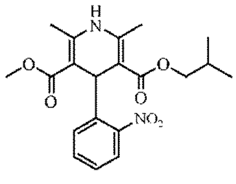
12

The asymmetry identification ability (separation factor α value) for the compound shown in the table was calculated from the retention coefficient ($k_1$) as shown below.

Retention coefficient ($k_1$)

$$k_1 = [(\text{retention time of antipode}) - (\text{dead time})]/\text{dead time}$$

Separation factor (α)

$$\alpha = (\text{retention coefficient of more strongly retained antipode})/(\text{retention factor of more weakly retained antipode})$$

[Table 1]

| Racemate | Column 1 | | Column 2 | | Column 3 | | Column 4 | | Column 5 | | Column 6 | | Eluent |
|---|---|---|---|---|---|---|---|---|---|---|---|---|---|
| | 2a 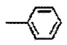 | | 2b 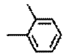 | | 2c 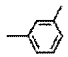 | | 2d 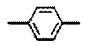 | | 2e 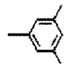 | | 2f 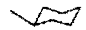 | | |
| | $k_1$ | α | $k_1$ | α | $k_1$ | α | $k_1$ | α | $k_1$ | α | $k_1$ | α | |
| 1 | 0.38(+) | ~1 | 0.23(+) | ~1 | 0.33 | 1.00 | 0.38(-) | ~1 | 0.36(+) | ~1 | 0.13(+) | 0.00 | A |
| | 0.31 | 1.00 | 0.24(+) | ~1 | 0.25(-) | ~1 | 0.38(+) | ~1 | 0.35(+) | ~1 | 0.09(+) | 0.00 | B |
| 2 | 0.26(+) | 1.42 | 0.20 | 1 | 0.25(+) | 1.61 | 0.30(+) | 1.62 | 0.28(+) | 1.86 | 0.13(+) | 0.00 | A |
| | 0.25(+) | 1.35 | 0.20(+) | ~1 | 0.20(+) | 1.37 | 0.30(+) | 1.61 | 0.28(+) | 1.83 | 0.10 | 0.00 | B |
| 3 | 3.36(-) | 1.10 | 2.14 | 1.00 | 2.70(-) | ~1 | 3.44 | 1.00 | 2.85 | 1.00 | 1.01(-) | 1.07 | A |
| | 2.56(-) | 1.20 | 2.12(-) | ~1 | 2.05(-) | 1.09 | 3.40(-) | ~1 | 2.77(-) | ~1 | 0.68(-) | 1.27 | B |
| 4 | 1.17(-) | 1.18 | 0.62 | 1.00 | 0.85(-) | 1.25 | 1.03(-) | 1.25 | 0.77(-) | 1.38 | 0.29(-) | 0.00 | A |
| | 0.84(-) | 1.19 | 0.42(-) | ~1 | 0.62(-) | 1.19 | 1.01(-) | 1.26 | 0.87(-) | 1.39 | 0.19(-) | 0.00 | B |
| 5 | 1.12(+) | 1.57 | 0.65 | 1.00 | 1.24(-) | 2.25 | 1.45(-) | 1.78 | 1.17(+) | 2.1 | 0.90(-) | 1.47 | A |
| | 0.91(-) | 1.38 | 0.69 | 1.00 | 0.79(-) | 1.64 | 1.44(+) | 1.81 | 1.15(+) | 2.08 | 0.62(-) | 1.02 | B |
| 6 | 1.10(-) | 1.26 | 0.5 | 1.00 | 0.58(-) | ~1 | 0.61(-) | 1.42 | 0.41(+) | ~1 | 0.08 | 0.00 | A |
| | 0.70(-) | ~1 | 0.50 | 1.00 | 0.33 | 1 | 0.61(-) | 1.43 | 0.39(+) | ~1 | 0.07 | 0.00 | B |
| 7 | 0.99(-) | 1.16 | 0.59 | 1 | 0.83(-) | 1.28 | 0.93(-) | 1.2 | 0.75(-) | 1.13 | 0.23(-) | 0.00 | A |
| | 0.82(-) | 1.14 | 0.59(-) | ~1 | 0.63 (-) | 1.08 | 0.93(-) | 1.19 | 0.72(-) | 1.13 | 0.19 | 0.00 | B |
| 8 | 0.31(+) | ~1 | 0.19 | 1.00 | 03 3 (+) | 1.28 | 0.40(+) | ~1 | 0.41(+) | 1.24 | 0.24(+) | 0.00 | A |
| | 0.30(+) | ~1 | 0.19(-) | ~1 | 0.27(+) | 1.3 | 0.40(+) | ~1 | 0.39(+) | 1.24 | 0.19(+) | 0.00 | B |
| 9 | 5.60(-) | 1.18 | 5.64(-) | 1.13 | 6.96(-) | 1.12 | 5.57(-) | 1.17 | 6.97(-) | 1.63 | 6.68(+) | 0.66 | A |
| | 3.71(-) | 1.16 | 5.66(-) | 1.12 | 6.32(-) | ~1 | 5.60(-) | 1.17 | 5.11(-) | 1.07 | 5.08(+) | 0.93 | B |
| 10 | 1.19(-) | 1.20 | 0.62 | 1.00 | 1.25(-) | 1.48 | 1.32(-) | 1.24 | 1.05(-) | 1.17 | 0.57 | 0.00 | A |
| | 1.09(-) | 1.18 | 0.42 | 1.00 | 0.93(-) | 1.47 | 0.88(-) | 1.18 | 0.86(-) | 1.14 | 0.42 | 0.00 | B |
| 11 | 0.92(-) | 1.30 | 0.51 | 1.00 | 0.73(-) | 1.56 | 0.83(-) | 1.69 | 0.64(+) | 1.70 | 0.38(+) | 0.00 | A |
| | 0.60(+) | 1.15 | 0.50 | 1.00 | 0.48(-) | 1.29 | 0.82(+) | 1.70 | 0.48(+) | 1.53 | 0.29 | 0.00 | B |

(continued)

| Racemate | Column 1 | | Column 2 | | Column 3 | | Column 4 | | Column 5 | | Column 6 | | Eluent |
|---|---|---|---|---|---|---|---|---|---|---|---|---|---|
| | 2a 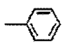 | | 2b 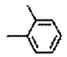 | | 2c 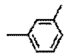 | | 2d 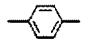 | | 2e 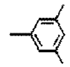 | | 2f 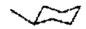 | | |
| | $k_1$ | α | $k_1$ | α | $k_1$ | α | $k_1$ | α | $k_1$ | α | $k_1$ | α | |
| 12 | 4.35(-)<br>1.69(+) | 1.11<br>~1 | 1.08(+)<br>1.10(+) | 1.18<br>1.12 | 2.83<br>1.27(+) | 1.00<br>~1 | 3.6<br>2.36(+) | 1.00<br>~1 | 2.07(+)<br>1.14(+) | 1.09<br>~1 | 1.27(+)<br>0.55 | 0.00<br>0.00 | A<br>B |

*In the table, the symbol in the parenthesis indicates the positive or negative of the optical rotation at 254 nm of the enantiomer eluted first. The descriptions of eluents A and B are as described above. In addition, the structural formula in the table indicates the type of group of $R^b$.

From the results in Table 1, columns 1, 3, 4, and 5 had good separation ability for at least 8 racemates. Column 2 showed high separation ability of racemate 12, and column 6 showed high separation ability of racemate 3. Columns 3, 4, and 5 produced using a chitosan compound having methyl group-substituted phenylcarbamate groups showed relatively high separation ability of racemates 2, 4, 5, and 11 compared to column 1 produced using a chitosan compound having unsubstituted phenylcarbamate groups. Column 5 produced using a chitosan compound having 3,5-dimethylphenylcarbamate groups showed the highest separation ability of racemates 2, 4, 5, and 11.

The chitosan compound having a phenylcarbamate group at the 3-position and 6-position of chitosan, in which some hydrogens of the phenyl groups were substituted with methyl groups serving as electron donating groups, showed good results for the separation of several racemates.

Reference Example

Results of racemate separation obtained by using a column packed with a separating agent for optical isomers, in which chitosan tris(3,5-dimethylphenylcarbamate) was supported on a silica gel surface-treated with a silane coupling agent having an amino group, the column described in Example 3 of Patent Document 1, are shown in Table 2 below. Note that the designation "chitosan tris(3,5-dimethylphenylcarbamate)" marked by * in Table 2 is probably an error for chitosan 2-(3,5-dimethylphenylurea)-3,6-di(3,5-dimethylphenylcarbamate).

[Table 2]

| Racemate | Example 3 described in JP 63-065989 A | |
|---|---|---|
| | Chitosan derivative: chitosan tris(3,5-dimethylphenylcarbamate)* | |
| | ki | α |
| 1 | 0.30(+) | ~1 |
| 2 | 0.22(+) | ~1 |
| 3 | 1.73(-) | 1.07 |
| 4 | 0.53(-) | 1.1 |
| 5 | 1.49(+) | 1.15 |
| 6 | 4.90(-) | ~1 |
| 7 | 0.65(-) | 1.11 |

In comparison of the results of separation using columns 1 to 6 above with the results in Table 2, columns 1, and 3 to 6 had large values of separation factor at least for three racemates. In addition, column 2 produced a better separation result for racemate 6 than the column in Table 2. The results revealed the superiority of the chitosan compound in which an amino group at a 2-position of chitosan was substituted with a group containing a thiourea group.

Industrial Applicability

The present disclosure provides a chitosan compound having a structure in which some hydroxyl groups of chitosan are substituted with thiourea derivatives, and the separating agent for optical isomers, the separating agent having the chitosan compound and a carrier. Using the separating agent for optical isomers of the present disclosure allows having high separation ability for specific racemates compared to separating agent for optical isomers, the separating agent obtained using a chitosan compound known in the art in which hydroxyl groups are substituted with carbamate derivatives.

**Claims**

1. A chitosan compound represented by Formula (I):

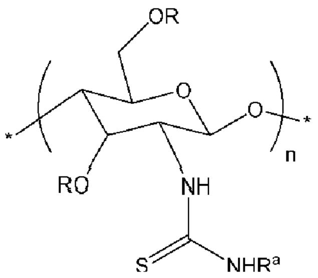

(I)

where each R is independently a group represented by Formula (II) or a group represented by Formula (III); $R^a$ is a linear alkyl group having from 1 to 5 carbons or an alkyl group having from 3 to 5 carbons and having a branched chain; and n is an integer of 5 or greater; and

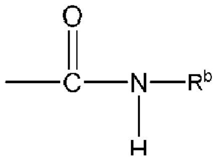

(II)

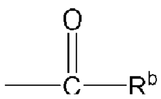

(III)

where each $R^b$ is independently an unsubstituted phenyl group, a phenyl group having a substituent, an unsubstituted cyclohexyl group, or a cyclohexyl group having a substituent, and each of the substituent is independently an alkyl group having from 1 to 5 carbons, or a halogen.

**2.** The chitosan compound according to claim 1, wherein the R is a group represented by Formula (II), wherein $R^b$ is an unsubstituted phenyl group or a phenyl group having a substituent, and the substituent is an alkyl group having from 1 to 5 carbons, or a halogen.

**3.** The chitosan compound according to claim 2, wherein the $R^b$ is a 2-substituted phenyl group, a 3-substituted phenyl group, a 4-substituted phenyl group, or a 3,5-substituted phenyl group.

**4.** The chitosan compound according to claim 2, wherein the $R^b$ is any of groups represented by Formulas (a) to (e):

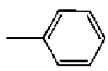 (a) 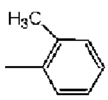 (b) 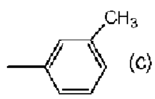 (c)

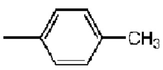 (d) 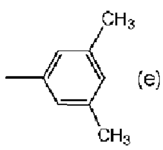 (e)

**5.** The chitosan compound according to claim 2, wherein the $R^b$ is any of groups represented by Formulas (a), (c), (d), and (e):

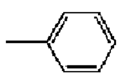 (a) 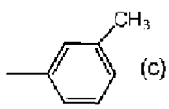 (c)

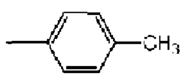 (d) 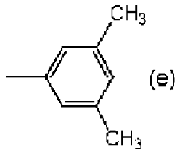 (e)

6. The chitosan compound according to any one of claims 1 to 5, wherein the $R^a$ is an alkyl group having from 3 to 5 carbons and having a branched chain.

7. A separating agent for optical isomers, the separating agent comprising the chitosan compound described in any one of claims 1 to 6 and a carrier.

8. The separating agent for optical isomers according to claim 7, wherein the carrier is a silica gel.

9. A method of manufacturing a chitosan compound, the method comprising:

reacting a deacetylated chitosan with a compound represented by Formula (IV) to introduce a thiourea group at a 2-position of the chitosan; and
reacting the chitosan into which the thiourea group is introduced with an isocyanate, a carboxylic acid, an ester, an acid halide, an acid amide compound, or an aldehyde including $R^b$ to introduce a group represented by Formula (II) or a group represented by Formula (III) at a 3-position and a 6-position of the chitosan:

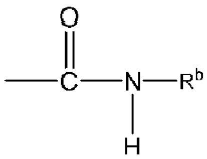 (II)

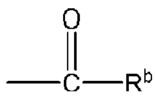 (III)

$S{=}C{=}N{-}R^a$ (IV)

where, in Formulas (II) and (III), each $R^b$ is independently an unsubstituted phenyl group, a phenyl group having a substituent, an unsubstituted cyclohexyl group, or a cyclohexyl group having a substituent, and each of the substituent is independently an alkyl group having from 1 to 5 carbons, or a halogen; and
in Formula (IV), $R^a$ is a linear alkyl group having from 1 to 5 carbons or an alkyl group having from 3 to 5 carbons and having a branched chain.

10. The method of manufacturing a chitosan compound according to claim 9, wherein the group introduced at the 3-position and 6-position of the chitosan is a group represented by Formula (II), wherein $R^b$ is an unsubstituted phenyl group or a phenyl group having a substituent, and the substituent is an alkyl group having from 1 to 5 carbons, or a halogen.

11. The method of manufacturing a chitosan compound according to claim 10, wherein the $R^b$ is a 2-substituted phenyl group, a 3-substituted phenyl group, a 4-substituted phenyl group, or a 3,5-substituted phenyl group.

12. The method of manufacturing a chitosan compound according to claim 10, wherein the $R^b$ is any of groups represented by Formulas (a) to (e):

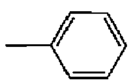 (a) 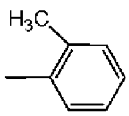 (b) 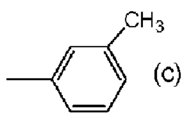 (c)

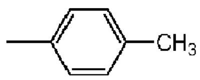 (d) 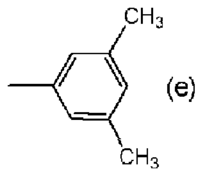 (e)

**13.** The method of manufacturing a chitosan compound according to claim 10, wherein the $R^b$ is any of groups represented by Formulas (a), (c), (d), and (e):

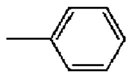 (a) 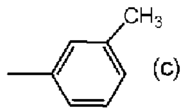 (c)

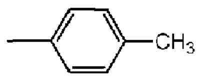 (d) 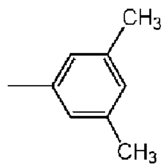 (e)

**14.** The method of manufacturing a chitosan compound according to any one of claims 9 to 13, wherein the $R^a$ is an alkyl group having from 3 to 5 carbons and having a branched chain.

**Patentansprüche**

**1.** Chitosanverbindung, dargestellt durch Formel (I),

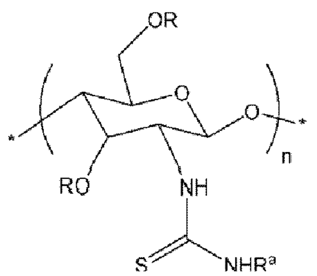 (I)

wobei jedes R unabhängig voneinander eine durch Formel (II) dargestellte Gruppe oder eine durch Formel (III) dargestellte Gruppe ist; $R^a$ eine lineare Alkylgruppe mit 1 bis 5 Kohlenstoffen oder eine Alkylgruppe mit 3 bis 5 Kohlenstoffen und mit einer verzweigten Kette ist und n eine ganze Zahl von 5 oder größer ist,

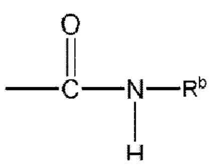 (II)

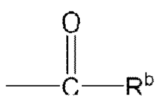 (III)

wobei jedes $R^b$ unabhängig voneinander eine unsubstituierte Phenylgruppe, eine Phenylgruppe mit einem Substituenten, eine unsubstituierte Cyclohexylgruppe oder eine Cyclohexylgruppe mit einem Substituenten ist

und jeder der Substituenten unabhängig voneinander eine Alkylgruppe mit 1 bis 5 Kohlenstoffen oder ein Halogen ist.

2. Chitosanverbindung gemäß Anspruch 1, wobei das R eine durch Formel (II) dargestellte Gruppe ist, wobei $R^b$ eine unsubstituierte Phenylgruppe oder eine Phenylgruppe mit einem Substituenten ist, und der Substituent eine Alkylgruppe mit 1 bis 5 Kohlenstoffen oder ein Halogen ist.

3. Chitosanverbindung gemäß Anspruch 2, wobei das $R^b$ eine 2-substituierte Phenylgruppe, eine 3-substituierte Phenylgruppe, eine 4-substituierte Phenylgruppe oder eine 3,5-substituierte Phenylgruppe ist.

4. Chitosanverbindung gemäß Anspruch 2, wobei das $R^b$ eine der durch die Formeln (a) bis (e) dargestellten Gruppen ist:

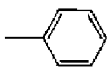 (a) 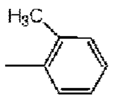 (b) 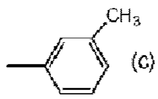 (c)

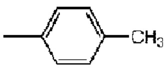 (d) 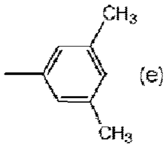 (e)

5. Chitosanverbindung gemäß Anspruch 2, wobei das $R^b$ eine der durch die Formeln (a), (c), (d) und (e) dargestellten Gruppen ist:

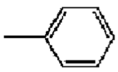 (a) 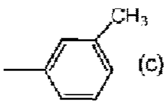 (c)

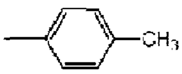 (d) 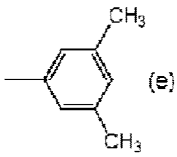 (e)

.

6. Chitosanverbindung gemäß einem der Ansprüche 1 bis 5, wobei das $R^a$ eine Alkylgruppe mit 3 bis 5 Kohlenstoffen und mit einer verzweigten Kette ist.

7. Trennmittel für optische Isomere, wobei das Trennmittel die in einem der Ansprüche 1 bis 6 beschriebene Chitosanverbindung und einen Träger umfasst.

8. Trennmittel für optische Isomere gemäß Anspruch 7, wobei der Träger ein Kieselgel ist.

9. Verfahren zum Herstellen einer Chitosanverbindung, wobei das Verfahren umfasst:

Umsetzen eines deacetylierten Chitosans mit einer durch Formel (IV) dargestellten Verbindung, um eine Thioharnstoffgruppe an einer Position 2 des Chitosans einzuführen, und
Umsetzen des Chitosans, in das die Thioharnstoffgruppe eingeführt ist, mit einem Isocyanat, einer Carbonsäure, einem Ester, einem Säurehalogenid, einer Säureamidverbindung oder einem Aldehyd, der/die/das $R^b$ einschließt, um eine durch Formel (II) dargestellte Gruppe oder eine durch Formel (III) dargestellte Gruppe an Position 3 und Position 6 des Chitosans einzuführen:

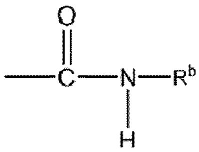 (II)

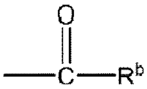 (III)

S=C=N-$R^a$ (IV)

wobei in den Formeln (II) und (III) jedes $R^b$ unabhängig voneinander eine unsubstituierte Phenylgruppe, eine Phenylgruppe mit einem Substituenten, eine unsubstituierte Cyclohexylgruppe oder eine Cyclohexylgruppe mit einem Substituenten ist und jeder der Substituenten unabhängig voneinander eine Alkylgruppe mit 1 bis 5 Kohlenstoffen oder ein Halogen ist und
in Formel (IV) $R^a$ eine lineare Alkylgruppe mit 1 bis 5 Kohlenstoffen oder eine Alkylgruppe mit 3 bis 5 Kohlenstoffen und mit einer verzweigten Kette ist.

**10.** Verfahren zum Herstellen einer Chitosanverbindung gemäß Anspruch 9, wobei die in Position 3 und Position 6 des Chitosans eingeführte Gruppe eine durch Formel (II) dargestellte Gruppe ist, wobei $R^b$ eine unsubstituierte Phenylgruppe oder eine Phenylgruppe mit einem Substituenten ist und der Substituent eine Alkylgruppe mit 1 bis 5 Kohlenstoffen oder ein Halogen ist.

**11.** Verfahren zum Herstellen einer Chitosanverbindung gemäß Anspruch 10, wobei das $R^b$ eine 2-substituierte Phenylgruppe, eine 3-substituierte Phenylgruppe, eine 4-substituierte Phenylgruppe oder eine 3,5-substituierte Phenylgruppe ist.

**12.** Verfahren zum Herstellen einer Chitosanverbindung gemäß Anspruch 10, wobei das $R^b$ eine der durch die Formeln (a) bis (e) dargestellten Gruppen ist:

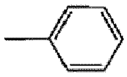 (a) 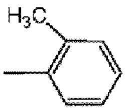 (b) 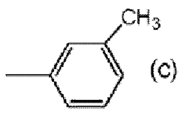 (c)

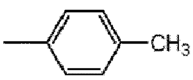 (d) 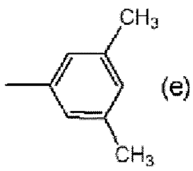 (e)

**13.** Verfahren zum Herstellen einer Chitosanverbindung gemäß Anspruch 10, wobei das $R^b$ eine der durch die Formeln (a), (c), (d) und (e) dargestellten Gruppen ist:

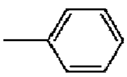 (a) 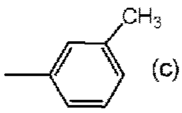 (c)

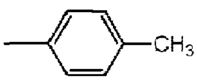 (d) 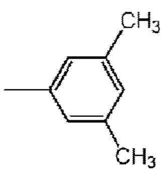 (e)

.

**14.** Verfahren zum Herstellen einer Chitosanverbindung gemäß einem der Ansprüche 9 bis 13, wobei das $R^a$ eine

Alkylgruppe mit 3 bis 5 Kohlenstoffen und mit einer verzweigten Kette ist.

**Revendications**

1. Composé de chitosane représenté par la formule (1) :

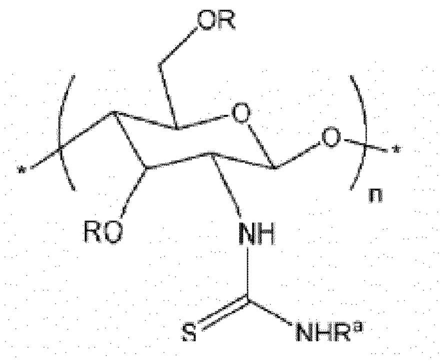 (I)

dans laquelle R est indépendamment un groupe représenté par la Formule (II) ou un groupe représenté par la Formule (III) ; $R^a$ est un groupe alkyle linéaire ayant de 1 à 5 carbones ou un groupe alkyle ayant de 3 à 5 carbones et ayant une chaîne ramifiée ; et n est un entier supérieur ou égal à 5 ; et

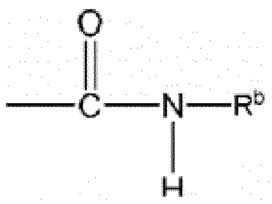 (II)

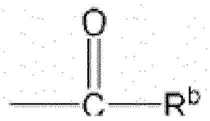 (III)

où chaque $R^b$ est indépendamment un groupe phényle non substitué, un groupe phényle ayant un substituant, un groupe cyclohexyle non substitué, ou un groupe cyclohexyle ayant un substituant, et chaque substituant est indépendamment un groupe alkyle ayant de 1 à 5 carbones, ou un halogène.

2. Composé de chitosane selon la revendication 1, dans lequel le R est un groupe représenté par la Formule (II), dans laquelle $R^b$ est un groupe phényle non substitué ou un groupe phényle ayant un substituant, et le substituant est un groupe alkyle ayant de 1 à 5 carbones, ou un halogène.

3. Composé de chitosane selon la revendication 2, dans lequel le $R^b$ est un groupe phényle 2-substitué, un groupe phényle 3-substitué, un groupe phényle 4-substitué, ou un groupe phényle 3,5-substitué.

4. Composé de chitosane selon la revendication 2, dans lequel le $R^b$ est l'un quelconque des groupes représentés par les formules (a) à (e) :

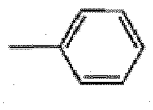 (a) 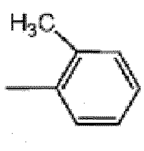 (b) 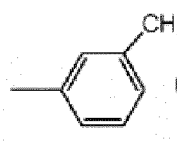 (c)

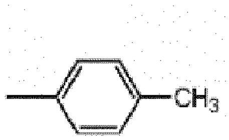 (d) 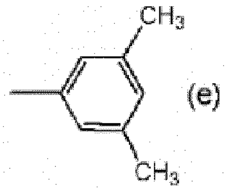 (e)

**5.** Composé de chitosane selon la revendication 2, dans lequel le $R^b$ est l'un quelconque des groupes représentés par les formules (a), (c), (d) et (e) :

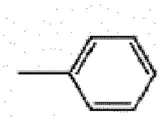 (a) 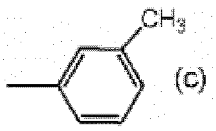 (c)

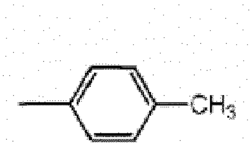 (d) 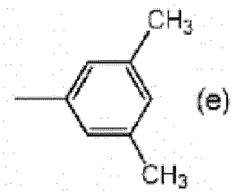 (e)

.

**6.** Composé de chitosane selon l'une quelconque des revendications 1 à 5, dans lequel le $R^a$ est un groupe alkyle ayant de 3 à 5 carbones et ayant une chaîne ramifiée.

**7.** Agent de séparation pour isomères optiques, l'agent de séparation comprenant le composé de chitosane décrit dans l'une quelconque des revendications 1 à 6 et un véhicule.

**8.** Agent de séparation pour isomères optiques selon la revendication 7, dans lequel le véhicule est un gel de silice.

**9.** Procédé de fabrication d'un composé de chitosane, le procédé comprenant :

la réaction d'un chitosane désacétylé avec un composé représenté par la Formule (IV) pour introduire un groupe thiourée au niveau d'une position 2 du chitosane ; et
la réaction du chitosane dans lequel est introduit le groupe thiourée avec un isocyanate, un acide carboxylique, un ester, un halogénure d'acide, un composé amide d'acide, ou un aldéhyde comprenant $R^b$ pour introduire un groupe représenté par la Formule (II) ou un groupe représenté par la Formule (III) au niveau d'une position 3 et d'une position 6 du chitosane :

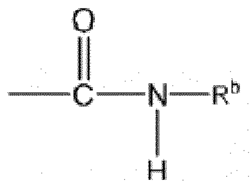 (II)

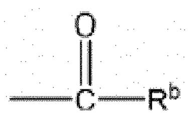 (III)

$S=C=N-R^a$ (IV)

où, dans les formules (II) et (III), chaque $R^b$ est indépendamment un groupe phényle non substitué, un groupe phényle ayant un substituant, un groupe cyclohexyle non substitué, ou un groupe cyclohexyle ayant un substituant, et chaque substituant est indépendamment un groupe alkyle ayant de 1 à 5 carbones, ou un halogène ; et dans la Formule (IV), Ra est un groupe alkyle linéaire ayant de 1 à 5 carbones ou un groupe alkyle ayant de 3 à 5 carbones et ayant une chaîne ramifiée.

**10.** Procédé de fabrication d'un composé de chitosane selon la revendication 9, le groupe introduit à la position 3 et la position 6 du chitosane étant un groupe représenté par la formule (II), dans laquelle $R^b$ est un groupe phényle non substitué ou un groupe phényle ayant un substituant, et le substituant est un groupe alkyle ayant de 1 à 5 carbones, ou un halogène.

**11.** Procédé de fabrication d'un composé de chitosane selon la revendication 10, dans lequel le $R^b$ est un groupe phényle 2-substitué, un groupe phényle 3-substitué, un groupe phényle 4-substitué, ou un groupe phényle 3,5-substitué.

**12.** Procédé de fabrication d'un composé de chitosane selon la revendication 10, dans lequel le $R^b$ est l'un quelconque des groupes représentés par les formules (a) à (e) :

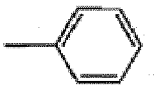
(a)
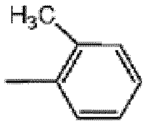
(b)
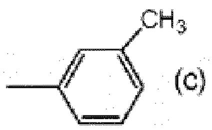
(c)

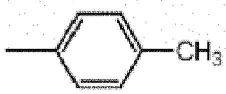
(d)
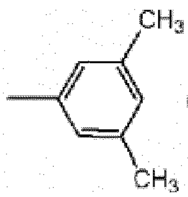
(e)

**13.** Procédé de fabrication d'un composé de chitosane selon la revendication 10, dans lequel le $R^b$ est l'un quelconque des groupes représentés par les formules (a), (c), (d) et (e) :

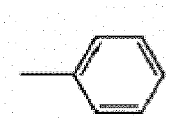
(a)
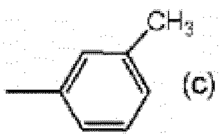
(c)

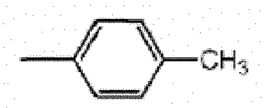
(d)
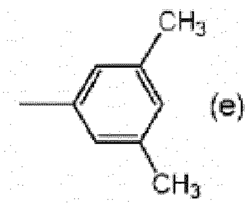
(e)
.

**14.** Procédé de fabrication d'un composé de chitosane selon l'une quelconque des revendications 9 à 13, dans lequel le $R^a$ est un groupe alkyle ayant de 3 à 5 carbones et ayant une chaîne ramifiée.

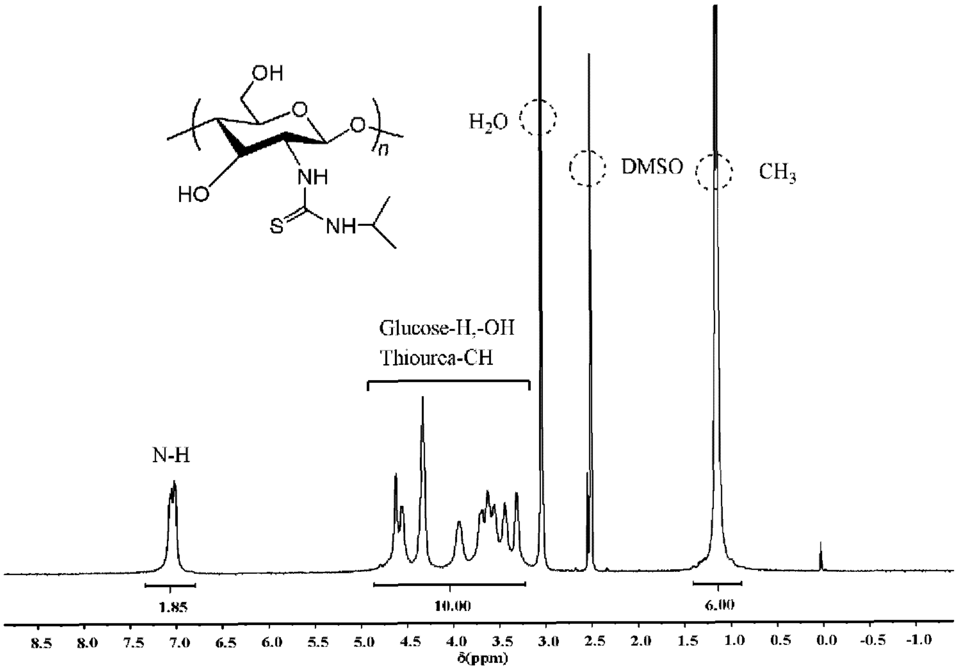

H2O
DMSO
CH3
Glucose-H,-OH
Thiourea-CH
N-H
1.85
10.00
6.00
8.5 8.0 7.5 7.0 6.5 6.0 5.5 5.0 4.5 4.0 3.5 3.0 2.5 2.0 1.5 1.0 0.5 0.0 -0.5 -1.0
δ(ppm)


FIG. 1

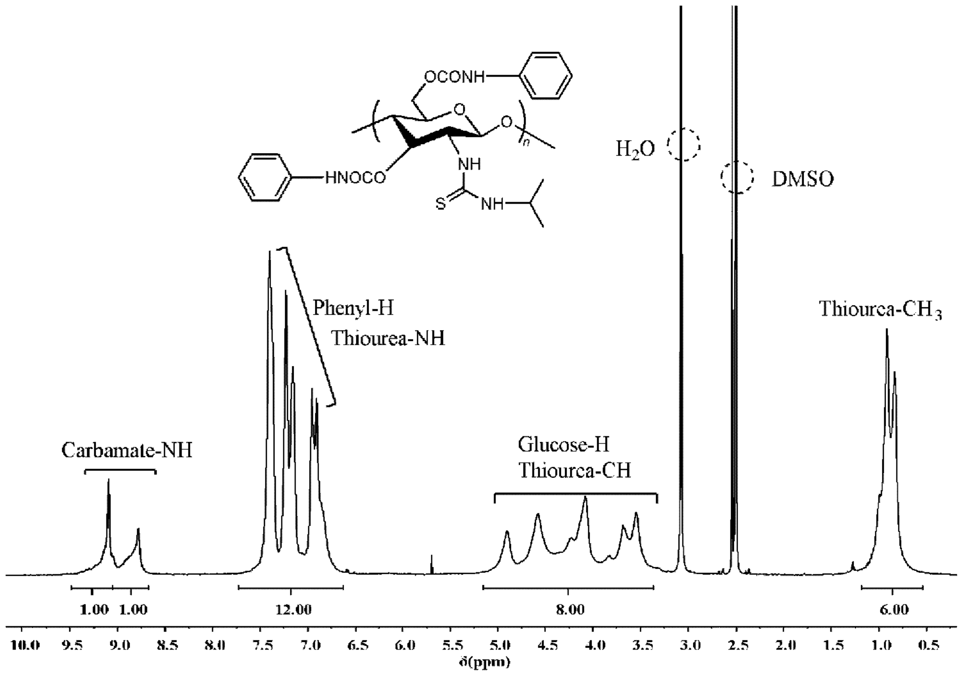
H2O
DMSO
Phenyl-H
Thiourea-NH
Thiourea-CH3
Carbamate-NH
Glucose-H
Thiourea-CH
1.00 1.00
12.00
8.00
6.00
10.0 9.5 9.0 8.5 8.0 7.5 7.0 6.5 6.0 5.5 5.0 4.5 4.0 3.5 3.0 2.5 2.0 1.5 1.0 0.5
δ(ppm)

FIG. 2

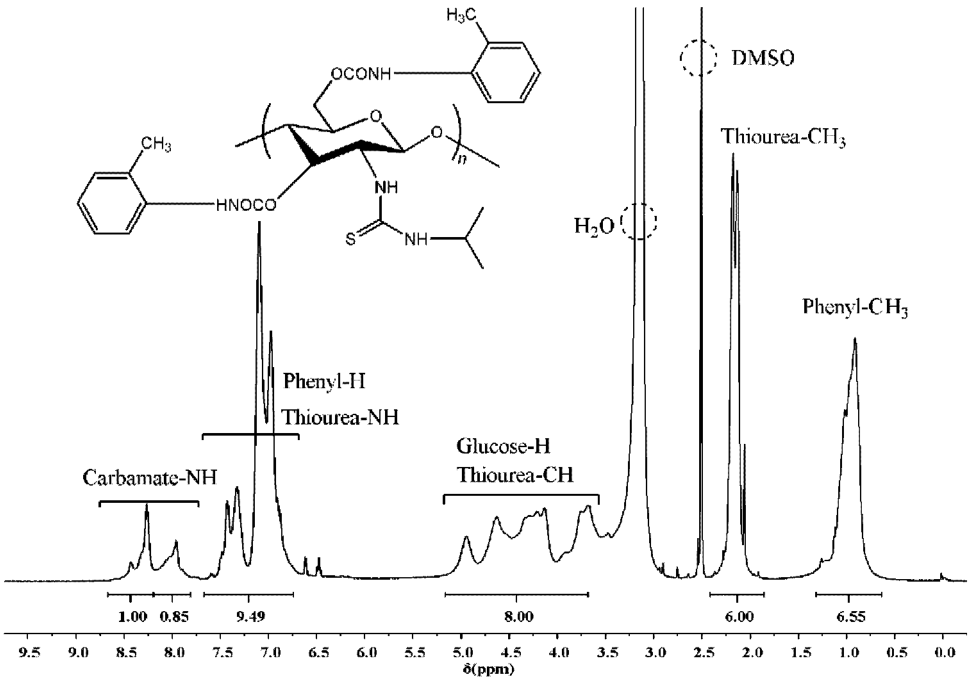
DMSO
Thiourea-$CH_3$
$H_2O$
Phenyl-$CH_3$
Phenyl-H
Thiourea-NH
Glucose-H
Thiourea-CH
Carbamate-NH
1.00 0.85 9.49 8.00 6.00 6.55
9.5 9.0 8.5 8.0 7.5 7.0 6.5 6.0 5.5 5.0 4.5 4.0 3.5 3.0 2.5 2.0 1.5 1.0 0.5 0.0
δ(ppm)

FIG. 3

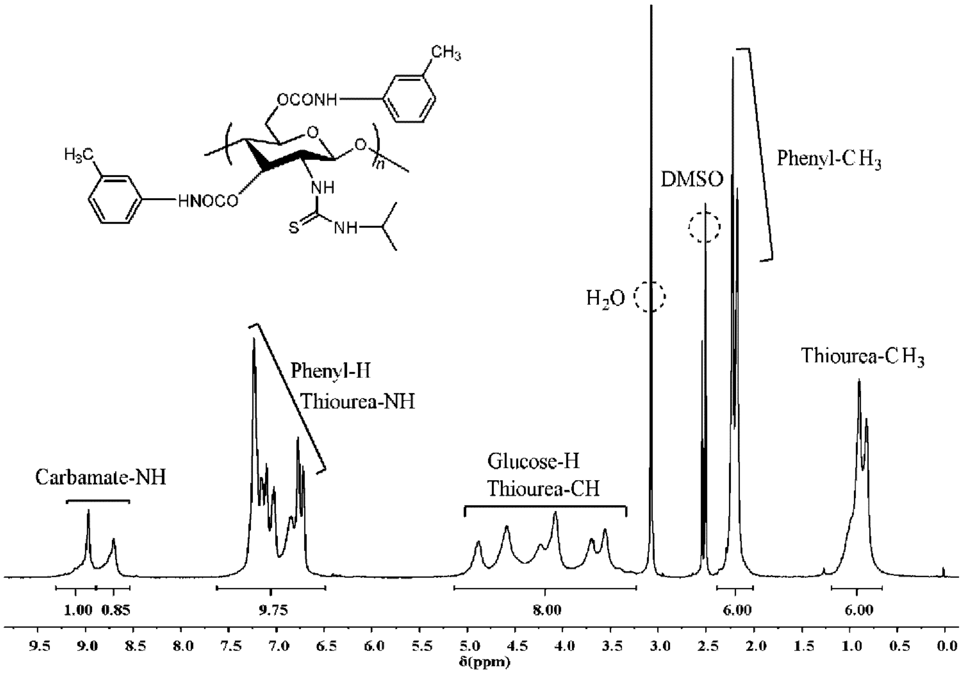
Carbamate-NH
Phenyl-H
Thiourea-NH
Glucose-H
Thiourea-CH
H2O
DMSO
Phenyl-CH3
Thiourea-CH3
1.00 0.85
9.75
8.00
6.00
6.00
9.5 9.0 8.5 8.0 7.5 7.0 6.5 6.0 5.5 5.0 4.5 4.0 3.5 3.0 2.5 2.0 1.5 1.0 0.5 0.0
δ(ppm)

FIG. 4

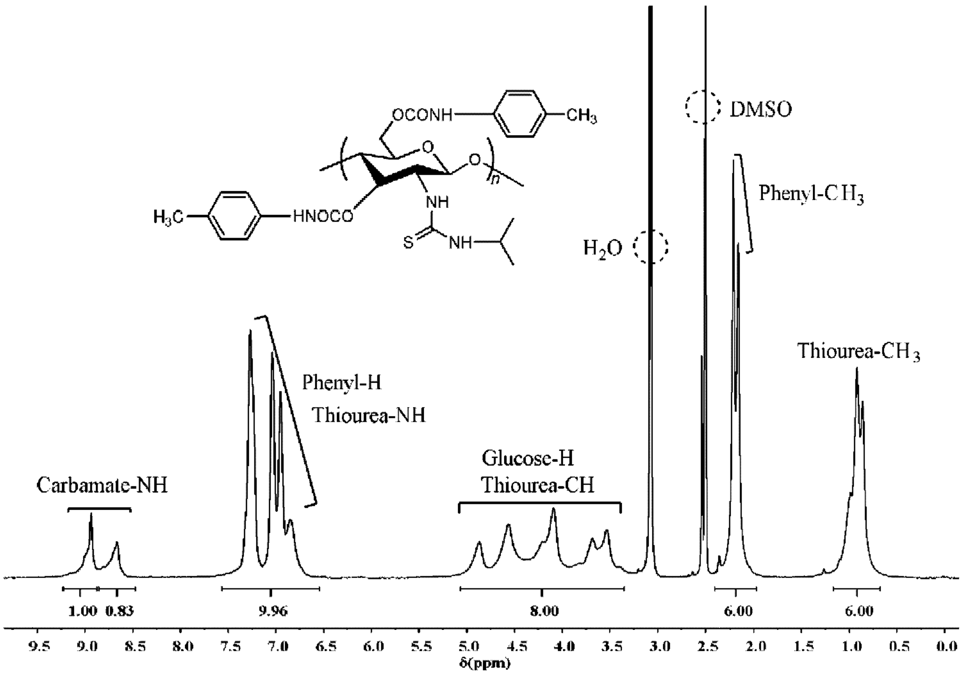
DMSO
Phenyl-CH3
H2O
Thiourea-CH3
Phenyl-H
Thiourea-NH
Glucose-H
Thiourea-CH
Carbamate-NH
1.00 0.83
9.96
8.00
6.00
6.00
9.5 9.0 8.5 8.0 7.5 7.0 6.5 6.0 5.5 5.0 4.5 4.0 3.5 3.0 2.5 2.0 1.5 1.0 0.5 0.0
δ(ppm)

FIG. 5

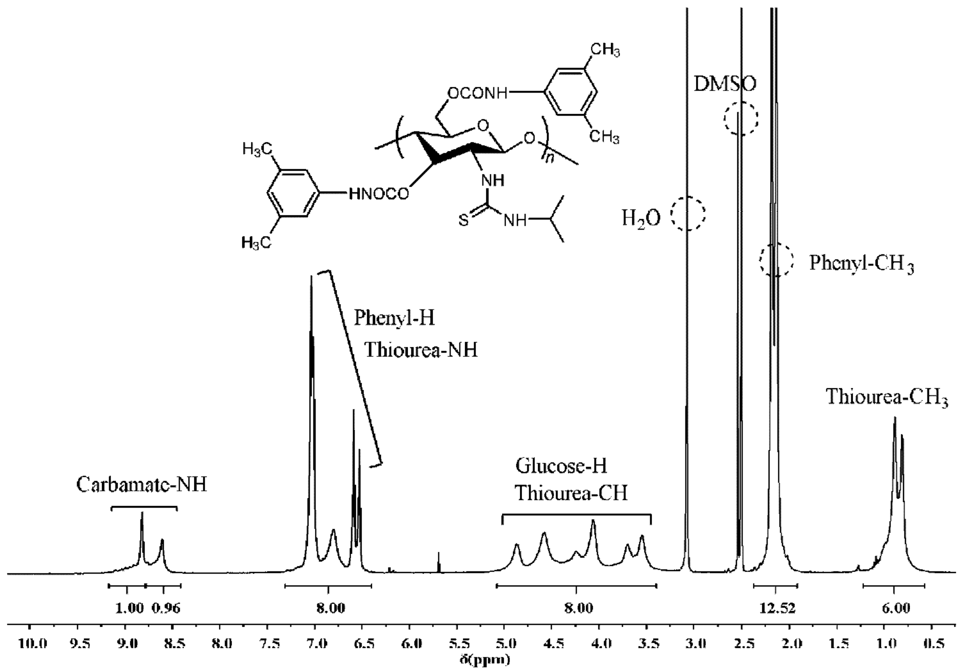
DMSO
$H_2O$
Phenyl-$CH_3$
Phenyl-H
Thiourea-NH
Thiourea-$CH_3$
Glucose-H
Thiourea-CH
Carbamate-NH
1.00 0.96
8.00
8.00
12.52
6.00
10.0 9.5 9.0 8.5 8.0 7.5 7.0 6.5 6.0 5.5 5.0 4.5 4.0 3.5 3.0 2.5 2.0 1.5 1.0 0.5
δ(ppm)

FIG. 6

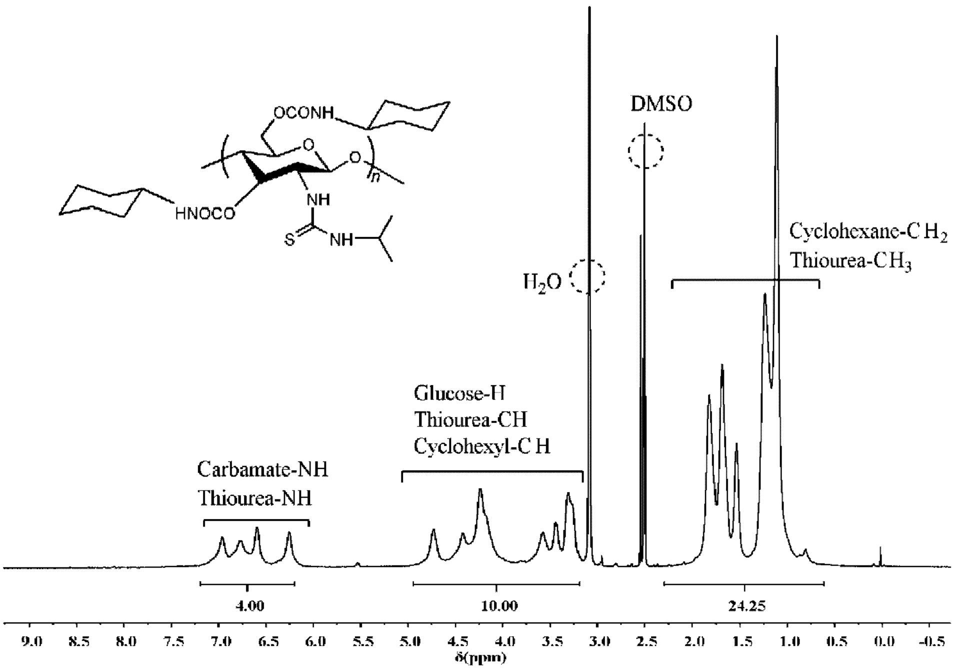
DMSO
H2O
Cyclohexane-CH2
Thiourea-CH3
Glucose-H
Thiourea-CH
Cyclohexyl-CH
Carbamate-NH
Thiourea-NH
4.00
10.00
24.25
9.0 8.5 8.0 7.5 7.0 6.5 6.0 5.5 5.0 4.5 4.0 3.5 3.0 2.5 2.0 1.5 1.0 0.5 0.0 -0.5
δ(ppm)

FIG. 7

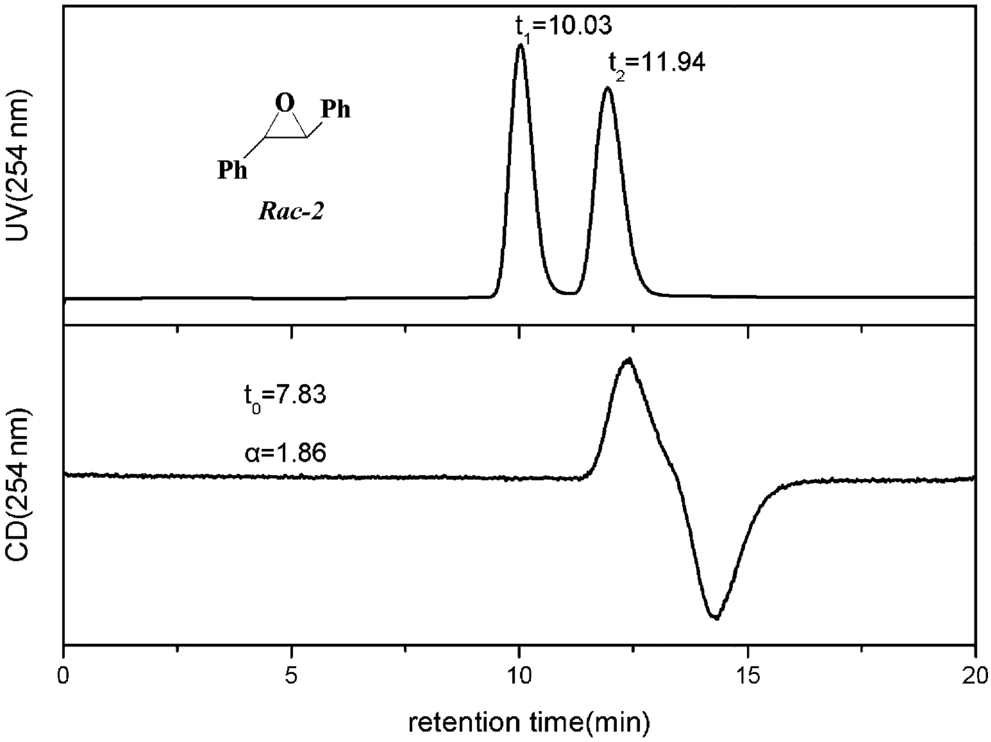

t1=10.03
t2=11.94
Rac-2
UV(254 nm)
t0=7.83
α=1.86
CD(254 nm)
0
5
10
15
20
retention time(min)


FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 63178101 A
- JP 6093002 A
- JP 63065989 A

### Non-patent literature cited in the description

- *J. Chromatogr. A,* 2014, vol. 1365, 86-93